Europäisches Patentamt

European Patent Office

Office européen des brevets

(19)

(11) Publication number: **0 150 551**
**A1**

# (12) EUROPEAN PATENT APPLICATION

(21) Application number: **84300659.4**

(22) Date of filing: **02.02.84**

(51) Int. Cl.⁴: **G 05 B 19/405**

(43) Date of publication of application: **07.08.85**
**Bulletin 85/32**

(84) Designated Contracting States: **CH DE FR GB LI SE**

(71) Applicant: **MIYAYAMA TECHNICS INCORPORATED,**
**4-4844 Onari-machi, Omiya-shi Saitama-ken (JP)**

(72) Inventor: **Miyayama, Shigeru, 4-844 Onari-machi,**
**Omiya-shi Saitama-ken (JP)**

(74) Representative: **Bernard, Alan Peter et al, F.J.**
**CLEVELAND & COMPANY 40/43 Chancery Lane,**
**London WC2A 1JQ (GB)**

(54) **Control system for a group of numerical-control machines.**

(57) The present invention relates to a central controlling system for a program in the field of a machine tool; and more particularly relates to a computer circuit connected so as to enable to demand different data optionally from each of N. C. machines wherein said combined circuit enables to control a combined program with different working through one operator by simply connecting said circuit to a number of said N. C. machines in actuation and further enables to simplify the compilation of a data program even when N. C. data are being transmitted.

0150551

- 1 -

CONTROL SYSTEM FOR A GROUP OF

NUMERICAL-CONTROL MACHINES

DESCRIPTION

The present invention relates to a controlling computer system for a group of numerical-control machines.

As is publicly known, the conventional N.C. machines read out operational data from a tape or a disc provided therewith and accordingly it is compelled to replace a tape presently in use whenever an operational process is changed or different. For that reason, a surplus storage space is inevitably required and also it is necessary to cope with a rapid consumption of a tape due to repeated use thereof.

- 2 -

In addition thereto, a great deal of work has conventionally been put in a compilation of a tape for a program in combined operations with a plurality of processes; and thus a settlement for a problem of increased indirect charge on a production cost as mentioned above is wide required.

The present invention relates to a central controlling system for a program in the field of a machine tool. Such a system as above is the so-called auxiliary computer

circuit for a plurality of N.C machines. In more detail, the present invention relates to the above-mentioned computer circuit of an extended terminal system, wherein a large quantity of data are linked in a host computer substituted with a reader for reading out a tape or a disk for the data provided with conventional N.C machines through an optical fiber and accordingly a plurality of N.C machines group of all kinds intended for use such, for example, as a milling machine, a drilling machine, an engine lathe, a robot or a rooter enable to control a machinery operation in response to (450 points, 480 kinds) an optional and different require (by manual or bar code signal) from such N.C unites, at least 16 sets and also at a remote place at least 100 meter basically, of the above-mentioned machines.

Figure 1 is a circuit constituent diagram of a computer system according to the present invention.

Figure 2 is a circuit constituent diagram for compiling N.C data by applying said system according to the present invention.

Figure 3 is a circuit constituent diagram when a system I calls data by reading out an external signal except the command of an operator.

-4-

The present invention provides a central control for a computer system easily enabling in a continuous process a compilation of the control and inspection of a program data for a number of N.C machines disposed at a remote place, including the preparation and correction thereof.

Hereinafter, embodiment according to the present invention will be described with reference to a computer block diagram of combined circuits based upon the thought of present invention.

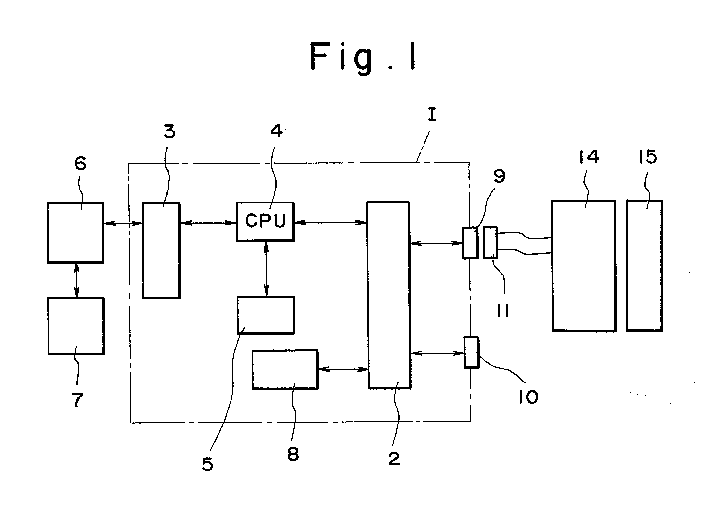

Fig. 1 is a constituent diagram wherein the computer system I is connected to an optional N.C machine 14 providing with a conventional tape for N.C data.

Said system I is composed of an interface 2 of input and output, an interface 3 for communication, a memory 5 for N.C data presently in working, CPU 4 for controlling the transmission and reception of data between said 2,3 and 5, the host computer 6 for data, a main memory 7 acting on said main elements, an operation box 8 of a maneuverer and the other sections.

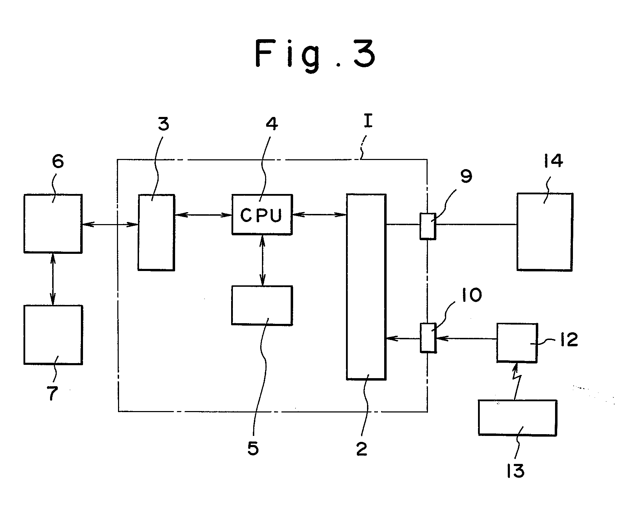

That is to say, said interface 2 of input and output enabling to correspond to an interface for reading out the tape of said N.C machine 14 is connected to the operation box 8 for control providing with an usual key board type reader and, a connector 9 for connecting of tape reader and the under-mentioned connector 10 for receiving an external signal (Fig. 3) are disposed between said N.C machine 14 and interface 2.

Said interface 2 and the interface 3 used for communication for transmitting and receiving the data in the host side for controlling data are connected to each other as illustrated; and the memory 5 used for the data presently in actuation and the above-mentioned CPU 4 are connected between said interface 2 and 3; thus the command of input and output of the data and further the compilation with respect to preparation and correction of a data program at the side of the host can be carried out.

In a constitution of the above-mentioned system, the circuit assembled by employing the members as listed in the following Table is responded to a number of N.C machines in the present embodiment.

Multi Bus:
    CPU. Board of a base plate with six (6) layers
        Operation Module, including SIO 2 channel
        64 KBRAM, 16 KBROM

SIO Board:
        2 sheets of SIO Board with 8 channel
        8 inches double density floppy (1M Byte)
        Winchester. Hard disk 20MB

-6-

CRT. Full·Key Board
(Key. 16 kinds)

Extended terminal:

    with Optical fiber, 100 m

Transfer System (interface 3 for communication)
           ......... RS 232C

Data transfer speed ........ 110 ~ 19,200 BPS

Synergism obtainable from the circuit thus combined according to the present invention will be described as set forth hereinafter.

That is to say, in the above-mentioned connection, when a maneuverer inputs the data name or operational program name to be necessitated through the operation box 8, CPU 4 for controlling the data between the interface 2 of input and output, the interface 3 for communication and the memory 5 demands said necessary data to the host computer 6; and accordingly a computer 6 transmits said data to the memory 5 in working from a memory 7.

When said data has been transmitted thereto, the interface 2 is in a state of automatically waiting for a command to be given from the N.C machine 14; and accordingly said CPU 4 transmits the data within the memory 5 to N.C machine 14 through each of said interface 2, a plug 9 and a plug 11 when such command is given.

Therefore, said N.C machine 14 may control a machine tool 15 by obtaining the data presently operating.

Thus, when the N.C machine 14 has finished one of the desired processes, CPU 4 determines the existence of a subsequent command through said memory 5.

By a subsequent command, CPU 4 will demand the host computer 6 of the data thereof.

Therefore, the data of the above-mentioned subsequent demand enter into the memory 5 from the memory 7 and repeats the same action with that of the above-mentioned one process.

Next, when the above-mentioned compilation of the data is carried out by the system I, a maneuverer operates the operation box 8 in preparing for data and accordingly the new data put in are written in the memory 5 through CPU 4.

In this case it should be preferable to preliminarily name the data thus written because a maneuverer has to call said data later on.

The new data thus named are stored at a main memory 7 through the host computer 6.

In the event that any correction of the data becomes necessary, a maneuverer may correct same through the operation box 8 because the contents of correction are taken into the memory 5 from said memory 7 through the host computer 6.

The data thus corrected are stored within the memory 7.

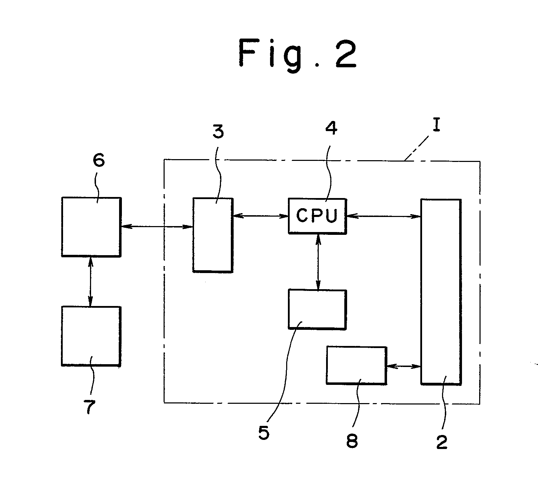

A constitution of a circuit at the time of such compilation as above is shown in Fig. 2.

According to the present invention, as is clear now, a plurality of data may be taken into said memory 5 simultaneously and therefore it is possible to prepare a program enabling to read out continuously such program combining more than two (2) kinds of contents or a plurality of data.

Next, an action for calling N.C data by reading out such an external signal, for example, as a bar code 13 except the command from the operation box 8 as described in Fig. 3 will be described as set forth hereinafter.

That is to say, a bar code reader 12 is connected to a plug 10 in Fig. 3. When a product providing with the code 13 is made to pass through the reader 12, said reader 12 reads out the code 13 so that said code 13 is sent to CPU 4 so as to be read out there.

Accordingly, in a constitution as illustrated in Fig. 3, it is possible to demand the host computer 6 of the data designated by the code 13.

Such data as demanded as above send the necessary data corresponding to the command from N.C machine 14 which have been taken into the memory 5 to said N.C machine 14 and accordingly a machine tool 15 may also be controlled in like manner with the above-mentioned embodiments (Fig. 1 and Fig. 2).

In the above-mentioned embodiments, a central controlling system can cover an object of 40 sets of N.C machine 14 as the maximum limit thereof by setting up more conventional boards.

By applying the non-expensive device with the above-mentioned constitution according to the present invention, it becomes possible to perform a central control for each of N.C data and at the same time it is also possible to simplify a compilation of a data program considerably even when the data are being transferred: and thus a program control in a continuous process coincident with each of the operational contents becomes possible.

Another effect of the present invention can reduce the frequency of use of a conventional tape or disk and furthermore a surplus total space becomes unnecessary; thus an indirect cost necessary for a machinery operation may be reduced widely.

## CLAIMS

1.    In a program control for Numerical control (N.C) machines,

A central controlling computer system of N.C machines group which comprises CPU 4 controlling the transmission and reception of N.C data being connected to the interface 2 of input and output, the interface 3 of communicating data to the host computer section and

a memory 5 for storing the data presently in working, respectively of which is disposed independently, between said both interfaces and further,

an operation box 8 of a maneuverer and a connector 9 are provided with said interface 2.

2.    In a system for controlling a data program in response to an operational request from N.C machines group, a central controlling computer system according to claim 1,

wherein a connector 9 of tape reader, a connector 10 for calling N.C data by reading out an external signal except the command of a maneuverer, a bar code 25, a reader 24 of the code are respectively connected to the interface 2 of said system corresponding to the interface for a tape reader on the side of N.C machines.

3.   A central controlling computer system according to
claims 1 and 2, wherein N.C machines group are linked optically
in the host computer section 6 of a central controlling system
so as to perform multiplex transmission

## Fig. 1

# Fig. 2

# Fig.3

0150551

European Patent Office

Application number

EP 84 30 0659

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-3 234 959 (THURNER)<br>* whole document * | 1,2 | G 05 B 19/405 |
| | --- | | |
| X | US-A-4 281 379 (McDONNELL DOUGLAS)<br>* abstract; column 4, line 46 - column 5, line 18; column 14, line 12 - column 15, line 7; figure 2 * | 1 | |
| | --- | | |
| A | PATENTS ABSTRACTS OF JAPAN, vol. 7, no. 121 (P-199)[1266], 25th May 1983; & JP - A - 58 39 308 (MITSUBISHI DENKI K.K.) 08-03-1983 | 3 | |
| | ----- | | |
| | | | **TECHNICAL FIELDS SEARCHED (Int. Cl. ³)**<br><br>G 05 B 19 |

The present search report has been drawn up for all claims

| Place of search<br>THE HAGUE | Date of completion of the search<br>19-09-1984 | Examiner<br>CORNILLIE O.A.R. |
|---|---|---|